# EUROPÄISCHE PATENTANMELDUNG

(11) **EP 0 623 778 A1**
(43) Veröffentlichungstag der Anmeldung: **09.11.1994**
(21) Anmeldenummer: 94103080.1
(22) Anmeldetag: 02.03.1994
(51) Int. Cl.: F16L 55/26

(54) **Vorrichtung zur Innenleckprüfung von Rohren**

(30) Priorität: 06.05.1993 DE 4314995
(71) Anmelder: Daimler-Benz Aerospace Aktiengesellschaft, D-81663 München (DE)
(72) Erfinder: Göllner, Erwin, D-85667 Oberpframmern (DE); Hütter, Horst, D-83684 Tegernsee (DE)

(57) **Zusammenfassung**

Die Erfindung bezieht sich auf eine Vorrichtung zur Innenleckprüfung von Rohren, mit zwei spiegelbildlich zueinander angeordneten Abschnitten (1,2), deren jeder mindestens eine Klemmeinrichtung (3,4) und mindestens ein Paar Laufrollen aufweist sowie eine pneumatische Druckfluidquelle (P), eine Inspektionsanordnung, eine Dichtanordnung und eine Steueranordnung. Jeder Abschnitt weist einen äußeren Zylinder (6,7) auf, mindestens einen verschiebbar in ihm konzentrisch gelagerten mittleren Zylinder (8,9) und mindestens einen verschiebbar in diesem konzentrisch gelagerten inneren Zylinder (10,11). Die beiden inneren Zylinder der beiden Abschnitte sind mit der gemeinsamen pneumatischen Druckfluidquelle verbunden, um so die pneumatische Energie für die Innendruckprüfung auch für die hydropneumatische Vorschubbewegung der beiden zueinander beweglichen Abschnitte zu verwenden.

## Beschreibung

Die vorliegende Erfindung betrifft eine verfahrbare Vorrichtung zur Innenleckprüfung von Rohren, bestehend aus zwei spiegelbildlich zueinander angeordneten Abschnitten, deren jeder mindestens eine Klemmeinrichtung und mindestens ein Paar Laufrollen aufweist, einer pneumatischen Druckfluidquelle, einer Inspektionsanordnung und einer Steueranordnung.

Derartige Vorrichtungen werden zur Überprüfung von sonst nicht zugänglichen, z. B. in der Erde vergrabenen Rohren wie Trinkwasserleitungen, Pipelines oder Abwasserrohren benötigt. Mittels der mitgeführten Inspektionseinrichtung, z. B. einer Fernsehkamera mit zugehöriger Beleuchtung, können die Innenwände der Rohre auf Beschädigungen untersucht werden; eventuelle Undichtigkeiten können auch dadurch ermittelt werden, daß die Vorrichtung nach entsprechendem Vorschub einen Teil des zu inspizierenden Rohres zeitweilig abdichtet, so daß dieser Teil unter einen erhöhten Druck gesetzt werden kann. Eine Druckabnahme während einer vorgegebenen Zeit deutet dabei auf eine Rohrundichtigkeit hin. Um Rohre größerer Länge überprüfen zu können, ist es erforderlich, die Vorrichtung jeweils um ein vorgegebenes Stück innerhalb des Rohres vorwärts zu bewegen und dann einen neuen Teil des Rohres für einen bestimmten Zeitraum abzudichten. Um mit einer einzigen Vorrichtung Rohre unterschiedlicher Durchmesser überprüfen zu können, sind auch unterschiedlich große Abstände zwischen dem Außenumfang der Vorrichtung und der Innenwand des Rohres zu überbrücken und ggf. abzudichten.

Um das Rohr lückenlos inspizieren zu können, ist eine exakte Positionierung der Vorrichtung erforderlich sowie ein genau kontrollierter Vorschub und Positionsanzeige, insbesondere, um einmal ermittelte Leckstellen später mit einer entsprechenden Reparaturvorrichtung problemlos wieder auffinden zu können.

Aufgabe der vorliegenden Erfindung ist es, eine fahrbare Vorrichtung zur Innenprüfung von Rohren zu schaffen, die an Jeder beliebigen Stelle exakt zu positionieren ist, die einfach im Aufbau ist und mit der ein ruckfreier und lastunabhängiger Vorschub ermöglicht wird.

Ausgehend von einer Vorrichtung der eingangs näher genannten Art wird zur Lösung dieser Aufgabe vorgeschlagen, daß jeder Abschnitt einen äußeren Zylinder, einen verschiebbar in ihm konzentrisch gelagerten mittleren Zylinder und einen verschiebbar in diesem konzentrisch gelagerten inneren Zylinder aufweist, daß die beiden inneren Zylinder der beiden Abschnitte mit der gemeinsamen pneumatischen Druckfluidquelle verbunden sind, und daß jeder Abschnitt mit einem hydraulischen Schaltkreis verbunden ist.

Die erfindungsgemäße verfahrbare Vorrichtung zur Innenleckprüfung von Rohren, von der weitere Einzelheiten in den Unteransprüchen beschrieben sind, bietet den Vorteil, daß die für die Leckprüfung der Rohrleitungen erforderliche pneumatische Energie, welche durch die pneumatische Druckfluidquelle zur Verfügung gestellt wird, auch für die hydropneumatische Vorschubbewegung der beiden relativ zueinander beweglichen Abschnitte Verwendung findet; da Jeder der beiden Abschnitte mit einem eigenen hydraulischen Schaltkreis verbunden ist und diese beiden Schaltkreise identisch zueinander sind, erfolgt eine ruckfreie und feinfühlige Steuerung der Bewegungen der jeweils im äußeren Zylinder gelagerten mittleren und inneren Zylinder und dadurch eine nahezu lastunabhängige Bewegungsgeschwindigkeit.

Im folgenden wird die Erfindung aus der Zeichnung näher erläutert, in der ein vorteilhaftes Ausführungsbeispiel dargestellt ist. Es zeigen:
- Fig. 1 a bis 1 d: verschiedene Stellungen der erfindungsgemäßen Vorrichtung im Prüfeinsatz innerhalb eines Rohres und
- Fig. 2: einen Schnitt durch die erfindungsgemäße Vorrichtung samt den Schaltbildern der dazugehörigen hydraulischen Schaltkreise.

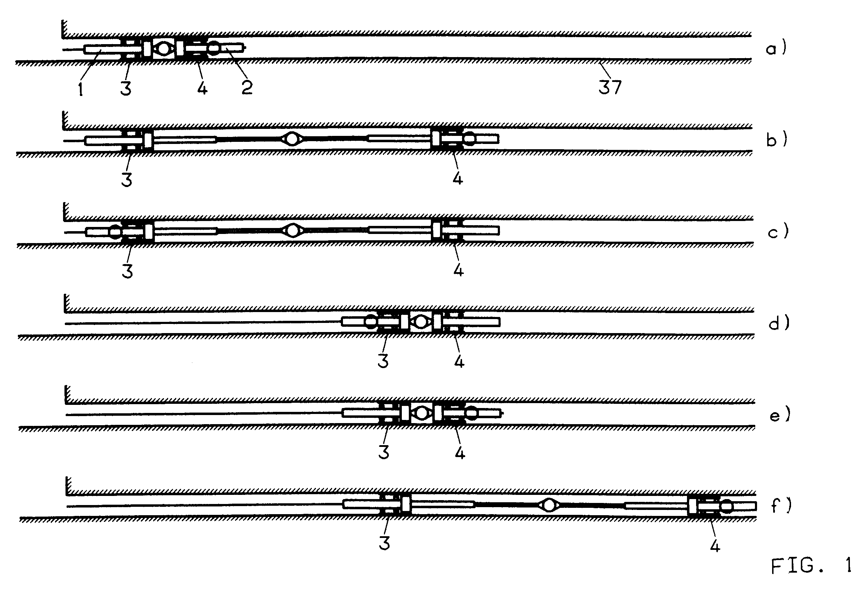

Fig. 1 zeigt verschiedene Stadien des Bewegungsablaufes einer erfindungsgemäßen verfahrbaren Vorrichtung zur Innenleckprüfung eines unterirdischen Rohres 37. Die Vorrichtung ist gemäß Fig. 1a in das zu prüfende Rohr 37 eingeführt; sie besteht aus zwei spiegelbildlich zueinander angeordneten Abschnitten 1, 2, wobei jeder Abschnitt mit einer Klemmeinrichtung, z. B. mit radial verfahrbaren Spreizbacken 3, 4, versehen ist, die in der Lage sind, den zugehörigen Abschnitt 1 oder 2 an der Rohrinnenwandung zeitweilig festzuklemmen. Fig 1a läßt erkennen, daß der Abschnitt 1 durch die ausgefahrenen Spreizbacken 3 an der Innenwand des Rohres 37 festgestellt ist, wohingegen der Abschnitt 2 mit den eingefahrenen Spreizbacken 4 verschoben werden kann.

Gemäß Fig. 1b ist der Abschnitt 2 durch Beaufschlagung der beiden Abschnitte 1, 2 mittels einer (nicht dargestellten) pneumatischen Druckfluidquelle, die z. B. auf einem Fahrzeug angeordnet ist, und über entsprechende Leitungen mit der Vorrichtung 1, 2 verbunden ist, gegenüber dem festgeklemmten Abschnitt 3 verschoben. Nachdem der Abschnitt 2 durch Ausfahren der radial verfahrbaren Spreizbacken 4 ebenfalls festgestellt worden ist und die auf den Außenseiten der beiden Abschnitte 1, 2 angeordneten, nicht dargestellten Abdichteinheiten, z. B. Faltenbälge, den zwischen ihnen befindlichen Abschnitt des Rohres 37 abgedichtet haben, kann durch entsprechende Druckbeaufschlagung mittels der pneumatischen Druckluftquelle dieser Rohrabschnitt auf Druckdichtigkeit überprüft werden, wie es in Fig. 1c angedeutet ist.

Nach erfolgter Drucküberprüfung des entsprechenden Abschnittes des Rohres 37 wird durch Einfahren der Spreizbacken 3 des Abschnittes 1 und entsprechende Druckbeaufschlagung mittels der pneumatischen Druckluftquelle sowie ausgefahrenen Spreizbacken 4 des Abschnittes 2 der Abschnitt 1 nachgezogen, wie es in Fig. 1d dargestellt ist.

Gemäß Fig. 1e werden nunmehr die Spreizbacken 3 des Abschnittes 1 ausgefahren, so daß dieser an der Innenwand des Rohres 3 festgeklemmt wird, wohingegen die Spreizbacken 4 des Abschnittes 2 eingefahren werden, so daß der Abschnitt 2 in Längsrichtung des Rohres um ein weiteres Stück verfahrbar ist, wie es in Fig. 1f dargestellt ist. Nach erneutem Festklemmen der Spreizbacke 4 und Ausfahren der entsprechenden Dichtanordnungen kann nun der sich an den ersten Meßabschnitt anschließende nächste Abschnitt des Rohres 37 auf Druckdichtigkeit wie im vorhergehenden Fall geprüft werden.

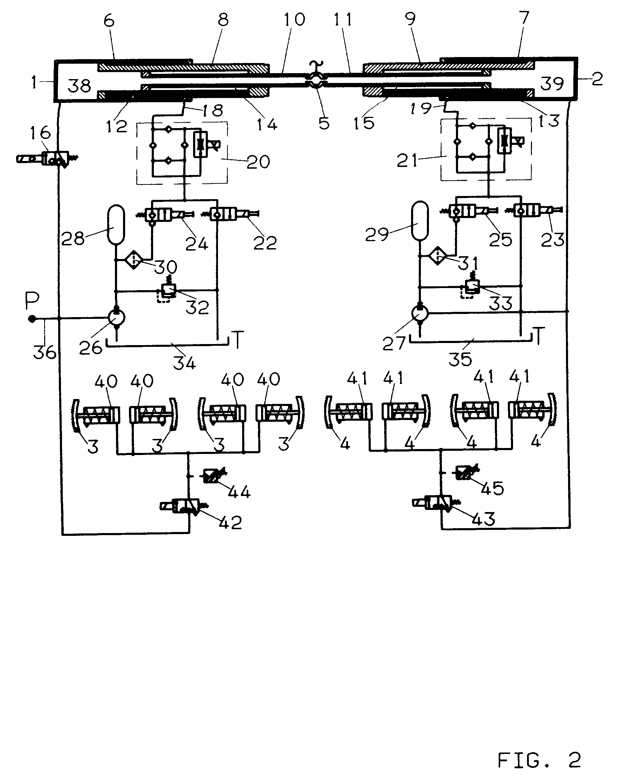

Fig. 2 zeigt in vergrößerter Darstellung einen Schnitt durch die erfindungsgemäße Vorrichtung mit den beiden spiegelbildlich zueinander angeordneten Abschnitten 1, 2 (ohne die zugehörigen Klemmeinrichtungen und Laufrollen) sowie schematisch den mit jedem Abschnitt 1, 2 verbundenen zusätzlichen hydraulischen Schaltkreis.

Die beiden identisch aufgebauten Abschnitte 1, 2 weisen jeweils einen äußeren Zylinder 6, 7 auf, einen verschiebbar in ihm gelagerten mittleren Zylinder 8, 9 und einen verschiebbar in diesem konzentrisch gelagerten inneren Zylinder 10, 11. Die beiden inneren Zylinder 10, 11 der beiden Abschnitte 1, 2 sind über ein Anschlußstück sowohl miteinander als auch mit der nicht dargetellten gemeinsamen pneumatischen Druckfluidquelle verbunden, durch die jeder Abschnitt 1, 2 mit Druckluft beaufschlagt werden kann.

Der innere Zylinder 10, 11 eines jeden Abschnittes 1, 2 ist von einem zwischen ihm und der Innenwand des mittleren Zylinders 8, 9 angeordneten Ringraum 14, 15 umgeben, und der mittlere Zylinder 8, 9 eines jeden Abschnittes 1, 2 ist von einem zwischen ihm und der Innenwand des äußeren Zylinders 6, 7 angeordneten Ringraum 12, 13 umgeben, wobei die Längsausdehnung dieser Ringräume den jeweiligen Verschiebeweg des zugehörigen Zylinders bestimmt. Bei einem praktischen Ausführungsbeispiel weist jeder Ringraum 12, 14; 13, 15 eine Länge von 600 mm auf, so daß der maximale Verlängerungsweg durch Ausfahren sowohl des mittleren als auch des inneren Zylinders eines jeden Abschnittes 1200 mm beträgt, und wenn beide Abschnitte 1, 2 zugleich mehrere Zylinder ausfahren, ein gesamter Verschiebeweg von 2400 mm erreichbar ist.

Der innere Ringraum 14, 15 eines jeden Abschnittes 1, 2 steht mit dem äußeren Ringraum 12, 13 über eine Fluidleitung in Verbindung und der äußere Ringraum 12, 13 steht wiederum jeweils mit einem dazugehörigen hydraulischen Schaltkreis über eine entsprechende Leitung 18, 19 in Verbindung.

Die Abschnitte 1, 2 der erfindungsgemäßen Vorrichtung werden auch als hydropneumatische Duplex-Teleskopzylinder-Anordnung (DTA) bezeichnet; durch die gemeinsame Druckbeaufschlagung mittels der pneumatischen Druckfluidquelle der beiden Druckkammern 38, 39 in den beiden Abschnitten 1, 2 wird die jeweils nicht im Inneren des zu überprüfenden Rohres 37 festgeklemmte Seite bewegt. Dabei bewegt sich der nicht festgeklemmte Abschnitt mit der doppelten Absolutgeschwindigkeit wie die verschiebbaren Zylinder der festgeklemmten Seite der DTA. Wie es im Zusammenhang mit Fig. 1a bis 1f bereits beschrieben wurde, kann durch wechselseitiges Festklemmen der beiden äußeren Zylinder mittels der Klemmeinrichtung, d. h. der Spreizbacken 3, 4 und den pneumatischen Spreizzylindern 40, 41, und Druckbeaufschlagung der einzelnen Druckkammern in den Abschnitten 1, 2 nicht nur eine Vorwärts- sondern auch eine Rückwärtsbewegung der DTA erreicht werden. Das Ausfahren der Spreizzylinder 40, 41 erfolgt pneumatisch und wird über die elektropneumatischen Spreizzylinder- und Steuerventile 42, 43, welche mit der Druckluftquelle 36 verbunden sind, gesteuert. Die Druckbeaufschlagung der Spreizzylinder 40, 41 wird durch den Druckschalter 44, 45 elektrisch angezeigt.

Vorteilhafterweise ist in jedem der beiden Abschnitte 1, 2 ein nicht dargestellter elektrischer Weggeber, z. B. ein Seilzugpotentiometer, eingebaut, um damit die Istwertposition der ausfahrbaren mittleren und inneren Zylinder relativ zum äußeren Zylinder zu messen. Somit kann über eine elektrische Sollwertvorgabe, z. B. über einen Steuerknüppel, jeder beliebige relative Abstand zwischen den beiden Abschnitten 1, 2 der DTA exakt positioniert werden.

Eine über den maximalen Verschiebeweg der DTA hinausgehende Positionierung und Wegmessung innerhalb eines längeren Abschnittes des zu untersuchenden Rohres 37 erfolgt durch elektrische Aufsummierung der durchgeführten einzelnen Bewegungsschritte.

Das Ausfahren der inneren und mittleren Zylinder der beiden Abschnitte 1, 2 der DTA erfolgt pneumatisch durch Druckbeaufschlagung der über das Anschlußstück 5 miteinander und mit der Druckfluidquelle verbundenen kolbenseitigen Druckkammern 38, 39 mittels des in Fig. 2 dargestellten elektropneumatischen Vorschubsteuerventils 16. Eine stufenlose Steuerung der Bewegungsgeschwindigkeit, und damit eine ruckfreie, quasi lastunabhängige Dämpfung der Verschiebebewegung erfolgt hydraulisch mittels des in Fig. 2 dargestellten hydraulischen Schaltkreises für jeden Abschnitt über das abflußseitig angeordnete, proportionale, elektrohydraulische Stromregelventil 20, 21, das über eine hydraulische Leitung 18, 19 mit dem zugehörigen äußeren Ringraum 12, 13 der beiden Abschnitte 1, 2 hydraulisch verbunden ist. Das Stromregelventil 20, 21 ist vom sog. Graetz-Schaltungs-Aufbau, d. h., daß das eigentliche Ventil selbst immer nur in einer Richtung vom hydraulischen Fluid durchflossen wird, unabhängig davon, ob das Fluid durch die Leitung 18, 19 zum Ringraum 12, 13 hin- oder vom Ringraum 12, 13 wegfließt. Durch die im Stromregelventil 20, 21 integrierte Druckwaage ist die Bewegungsgeschwindigkeit der dadurch ansteuerbaren inneren Zylinder 10, 11 sowie der mittleren Zylinder 8, 9 nahezu lastunabhängig. Die Steuerung des dabei in das zugehörige Hydraulikreservoir 34, 35 abfließenden Hydraulikfluids, z. B. Hydrauliköls, erfolgt über das zugehörige elektrohydraulische 2/2-Wege-Ablauf-Steuerventil 22, 23.

Das Einfahren der Jeweils verfahrbaren Zylinder der beiden Abschnitte 1, 2 der DTA erfolgt nun hydraulisch über die getrennte Druckbeaufschlagung der beiden Ringräume 12, 14 bzw. 13, 15 eines jeden Abschnittes 1, 2 mittels des hydraulischen Schaltkreises. Infolge der wesentlich geringeren wirksamen Fläche der dadurch beaufschlagten Kolbenringflächen, mit denen sowohl der innere Zylinder 10, 11 als auch der mittlere Zylinder 8, 9 an der jeweiligen Innenwand der sie umgebenden Zylinder gleitet, ist für das Einfahren (entsprechend Fig. 1d) nur ein geringes Olvolumen, Jedoch ein höherer Hydraulikdruck, notwendig. Dieser Hydraulikdruck wird durch einen hydropneumatischen Hochdruckwandler 26, 27, z. B. eine druckluftbetriebene Hydraulikpumpe, mit interner pneumohydraulischer Druckübersetzung erzeugt. Dieser Hochdruckwandler 26, 27 steht dabei einerseits mit dem zugehörigen Reservoir 34, 35 in Verbindung und andererseits mit der pneumatischen Druckfluidquelle P über den Anschluß 36, und einem Dämpfungsspeicher 28, 29. Bedingt durch den Druckluftantrieb und den Fortfall elektrischer Steuerelemente ist ein derartiger hydropneumatischer Hochdruckwandler, z. B. in Form einer druckluftbetriebenen Hydraulikpumpe, für Anwendungen in explosionsgefährdeter Umgebung besonders geeignet.

Durch die hohe pneumo-hydraulische Druckübersetzung von beispielsweise 8:1 (entsprechend einem Druck P_{Luft} von 10 bar und einem Druck von P_{Hydraulik} 80 bar) kann eine große Zugkraft in der DTA, die für das Nachziehen von langen Versorgungsleitungen erforderlich ist, bei geringem Ölvolumen, trotz der kompakten Bauweise realisiert werden. Der Bewegungsvorgang wird dabei durch das elektro-hydraulische 2/2-Wege-Zulauf-Steuerventil 24, 25 eingeleitet, das parallel zum elektro-hydraulischen 2/2-Wege-Ablauf-Steuerventil 22, 23 im hydraulischen Schaltkreis angeordnet ist. Die Steuerung der Einfahrgeschwindigkeit der beiden Abschnitte 1, 2 der DTA erfolgt dabei zuflußseitig über das proportionale elektro-hydraulische Stromregelventil 20, 21. Dabei bewirkt die Anordnung der vier in diesem Stromregelventil angeordneten Rückschlagventile, d. h. die sog. Graetz-Schaltung, daß der Ventilkörper immer in derselben Durchflußrichtung durchströmt wird.

Mit 30, 31 ist in jedem hydraulischen Schaltkreis ein Filtersieb bezeichnet und mit 32, 33 ein Sicherheitsventil, das beispielsweise auf 100 bar ausgelegt ist. Eine Entlüftung der Druckluftkammern 38, 39 in den beiden Abschnitten 1, 2 beim Einfahren erfolgt durch das elektropneumatische Vorschubsteuerventil 16, das wiederum bei 36 mit der pneumatischen Druckluftversorgung P verbunden ist.

Ein wesentlicher Vorteil der erfindungsgemäßen Vorrichtung ist darin zu sehen, daß die für die Leckprüfung der Rohre 37 erforderliche pneumatische Energie auch für die druckfreie, hydropneumatische Vorschubbewegung der DTA verwendet werden kann.

## Patentansprüche

1. Verfahrbare Vorrichtung zur Innenleckprüfung von Rohren, bestehend aus zwei spiegelbildlich zueinander angeordneten Abschnitten, deren jeder mindestens eine Klemmeinrichtung und mindestens ein Paar Laufrollen aufweist, einer pneumatischen Druckfluidquelle, einer Inspektionsanordnung, einer Dichtanordnung und einer Steueranordnung, **dadurch gekennzeichnet,** daß jeder Abschnitt einen äußeren Zylinder (6, 7) aufweist, mindestens einen verschiebbar in ihm konzentrisch gelagerten mittleren Zylinder (8, 9) und mindestens einen verschiebber in diesem konzentrisch gelagerten inneren Zylinder (10, 11) aufweist, daß die beiden inneren Zylinder (10, 11) der beiden Abschnitte (1, 2) mit der gemeinsamen pneumatischen Druckfluidquelle verbunden sind, und daß jeder Abschnitt (1, 2) mit einem hydraulischen Schaltkreis verbunden ist.

2. Vorrichtung nach Anspruch 1, **dadurch gekennzeichnet,** daß die Klemmeinrichtung aus zwei oder mehreren über den Umfang des Abschnittes verteilten, radial verfahrbaren Spreizbacken (3, 4) besteht.

3. Vorrichtung nach Anspruch 1, **dadurch gekennzeichnet,** daß der innere Zylinder (10, 11) von einem zwischen ihm und der Innenwand des mittleren Zylinders 8, 9 angeordneten Ringraum 14, 15 umgeben ist, daß der mittlere Zylinder (8, 9) von einem zwischen ihm und der Innenwand des äußeren Zylinders (6, 7) angeordneten Ringraum (12, 13) umgeben ist und daß der innere Ringraum (14, 15) mit dem äußeren Ringraum (12, 13) und dieser mit dem hydraulischen Schaltkreis in Verbindung steht.

4. Vorrichtung nach einem der vorhergehenden Ansprüche, **dadurch gekennzeichnet,** daß der hydraulische Schaltkreis ein proportionales elektrohydraulisches Stromregelventil (20, 21) mit Graetz-Schaltung, ein ihm nachgeschaltetes elektrohydraulisches 2/2-Wege-Ablauf-Steuerventil (22, 23), ein zu diesem parallel geschaltetes elektrohydraulisches 2/2-Zulauf-Steuerventil (24, 25), einen Dämpfungsspeicher (28, 29) und einen hydropneumatischen Hochdruckwandler (26, 27) aufweist.

5. Vorrichtung nach Anspruch 4, **dadurch gekennzeichnet,** daß der hydropneumatische Hochdruckwandler (26, 27) eine druckluftbetriebene Hydraulikpumpe ist, die mit der pneumatischen Druckfluidquelle in Verbindung steht.

6. Vorrichtung nach einem der vorhergehenden Ansprüche, **dadurch gekennzeichnet,** daß jeder Abschnitt (1, 2) mit einem elektrischen Weggeber versehen ist, der die Istwertposition der verschiebbaren inneren und mittleren Zylinder relativ zum äußeren Zylinder mißt.

7. Vorrichtung nach Anspruch 7, **dadurch gekennzeichnet,** daß der elektrische Weggeber ein Seilzugpotentiometer ist.
